# EUROPÄISCHE PATENTSCHRIFT

(11) **EP 0 838 295 B1**
(45) Veröffentlichungstag und Bekanntmachung des Hinweises auf die Patenterteilung: **23.04.2003**
(21) Anmeldenummer: 97111703.1
(22) Anmeldetag: 10.07.1997
(51) Int. Cl.: B23D 29/02, B25G 3/34

(54) **Schneidwerkzeug**
Cutting utensil
Outil de coupe

(30) Priorität: 24.10.1996 DE 19644208
(43) Veröffentlichungstag der Anmeldung: 29.04.1998
(73) Patentinhaber: VBW Vereinigte Beckersche Werkzeugfabriken GmbH & Co. KG, 42857 Remscheid (DE)
(72) Erfinder: Erdmeier, Hans-Udo, 42857 Remscheid (DE); Emhardt, Frank, 42929 Wermelskirchen (DE); Krugmann, Joachim, 42857 Remscheid (DE); Schmidt, Jens-Uwe, 42105 Wuppertal (DE); Schwandrau, Sieghardt, 42853 Remscheid (DE); Suhr, Frank, 42929 Wermelskirchen (DE)
(74) Vertreter: Lenzing, Andreas, Dr.

(56) Entgegenhaltungen:
- US-A- 4 792 256
- US-A- 5 168 629

## Beschreibung

Die vorliegende Erfindung betrifft eine Zange mit rohrförmigen Griffstücken.

Derartige Zangen sind aus der Praxis bekannt, beispielsweise in Form von Bolzenschneidern oder Mattenschneidern. Bei den bekannten Zangen wird der eigentliche Zangenkopf als Schmiedeteil hergestellt und trägt an seinen den Zangenmessern abgewandten Enden Rohrköpfe, auf die die rohrförmigen Griffstücke mit einer Preßpassung aufgesetzt werden. Bei den bekannten Zangen sind die Rohrköpfe aus Vollmaterial mit einem Querschnitt, der der lichten Weite des Griffrohres angepaßt ist. Die Rohre sind aus einem Stahlrohr gefertigt und im Querschnitt rund.

Aus der Druckschrift US 5,168,629 ist eine Schere bekannt, die ein rohrförmiges Griffstück aufweist, welches auf einen im Querschnitt kreuzförmig ausgebildeten Abschnitt aufgesteckt wird. Die Schere wird an diesem Griffstück gehalten, während der zweite Schenkel der Schere mit dem Daumen betätigt wird. Die Befestigung des Griffstücks an dem Abschnitt ist zur Übertragung größerer Hebelkräfte, wie sie bei einer Zange auftreten, nicht geeignet.

Bei den bekannten Zangen der erstgenannten Bauart wird es in der Praxis als unangenehm empfunden, daß diese ein relativ hohes Gewicht aufweisen. Es ist deshalb Aufgabe der vorliegenden Erfindung, die bekannten Zangen bei gleicher Funktionssicherheit dahingehend zu verbessern, daß deren Gewicht deutlich reduziert wird.

Diese Aufgabe wird von einer Zange mit den Merkmalen des Anspruchs 1 gelöst.

Weil der Abschnitt zwischen der in Bewegungsrichtung liegenden Achse und der quer zur Bewegungsrichtung liegenden Achse in Längsrichtung des Abschnitts verlaufende Ausnehmungen aufweist, läßt sich das Gewicht um das in den Ausnehmungen ausgesparte Materialgewicht erniedrigen. Dabei ist durch die Auswahl des Ortes, an dem die Ausnehmungen angebracht werden, nach wie vor eine gute Abstützung des jeweiligen Griffstückes in der wesentlichen Bewegungsrichtung sowie quer zur Bewegungsrichtung gewährleistet. In den dazwischenliegenden Belastungsrichtungen ist keine vollflächige Anlage des Griffstückes an den Abschnitt erforderlich.

Wenn die Rohrköpfe in dem in die Griffstücke einsetzbaren Abschnitt im Querschnitt etwa kreuzförmig gestaltet sind, so daß in der etwa mit der Bewegungrichtung zusammenfallenden Achse Stege ode Rippen gebildet sind, kann sich das jeweilige Griffstück gezielt im Bereich der Stege oder Rippen gegen die eingesteckten Abschnitte abstützen.

Die kreuzförmige Anordnung erlaubt es außerdem, die Griffstücke mit einer besonders guten Preßpassung auf die Rohrköpfe aufzusetzen, weil sich die Wandung des jeweiligen Griffstückes in dem zwischen den Stegen oder Rippen liegenden Bereich zum Ausgleich einer geringfügig zu engen Passung in die Ausnehmungen hineinverformen kann.

Es ist vorteilhaft, wenn die Rohrköpfe in dem in die Griffstücke einsetzbaren Abschnitt wenigstens eine in Längsrichtung begrenzte Ausnehmung oder Nut aufweisen. Bei aufgestecktem Griffstück kann dann das Material des Griffstücks in die Nut eingepreßt werden und in Verbindung mit der Begrenzung der Ausnehmung oder der Nut eine formschlüssig gesicherte Verbindung zwischen dem Rohrkopf und dem Griffstück erhalten werden. Auf diese Weise wird auch bei besonders hohen Belastungen ein Abziehen der Griffstücke in Längsrichtung verhindert. Wenn die Griffstücke in ihrer etwa mit der Bewegungsrichtung zusammenfallenden Achse eine größere Dicke aufweisen als in der etwa quer zur Bewegungsrichtung liegenden Achse, ist die Festigkeit in den am höchsten beanspruchten Bereichen besonders gut. Dabei kann es vorteilhaft sein, wenn die Griffstücke im Querschnitt zumindest abschnittsweise nicht kreisrund ausgebildet sind. In dem auf die Rohrköpfe aufgesetzten Bereich kann dann das jeweilige Griffstück eine Querschnittsgeometrie erhalten, die eine besonders zuverlässige Materialverbindung bei guter Festigkeit und geringem Gewicht erlaubt. Das dem Rohrkopf abgewandte Ende kann nach ergonomischen Gesichtspunkten gestaltet werden. Es ist insbesondere vorteilhaft, wenn die Griffstücke im Querschnitt zumindest Abschnittsweise oval sind, wobei die größere Halbachse in Richtung der Hauptbelastung, also in Bewegungsrichtung, verlaufen sollte und die Achse kleineren Durchmessers quer zur Bewegungsrichtung, insbesondere im Bereich der neutralen Faser angeordnet sein sollte.

Vom Gesichtspunkt der Materialkosten her ist es vorteilhaft, wenn die Griffstücke aus nahtgeschweißten Rohren gefertigt sind. Dabei kann die geschweißte Naht der Rohre in der etwa quer zur Bewegungsrichtung liegenden Achse, insbesondere im Bereich des kleinsten Durchmessers der Rohre angeordnet sein. Nahtgeschweißte Rohre sind an sich bei Einsatz in hochbelasteten Konfigurationen nicht vorteilhaft. Wenn aber ein Rohr mit einer festgelegten Orientierung so eingesetzt werden kann, daß die Schweißnaht im Bereich der neutralen Faser des Rohrs liegt, dann ist die gegenüber nahtlosen Rohren geringfügig kleinere Festigkeit unbeachtlich.

Umfangreiche Versuche haben ergeben, daß auch bei Verwendung einer Leichtmetallegierung zur Fertigung der Griffstücke eine sichere Funktion und eine große Dauerhaftigkeit gewährleistet ist.

Ein Ausführungsbeispiel der vorliegenden Erfindung wird im folgenden anhand der Zeichnung beschrieben.

Es zeigen:
- Figur 1:: Einen erfindungsgemäßen Mattenschneider in einer Draufsicht quer zur Bewegungsrichtung; sowie
- Figur 2: den Mattenschneider gemäß Figur 1 in einer Ansicht in Bewegungsrichtung.

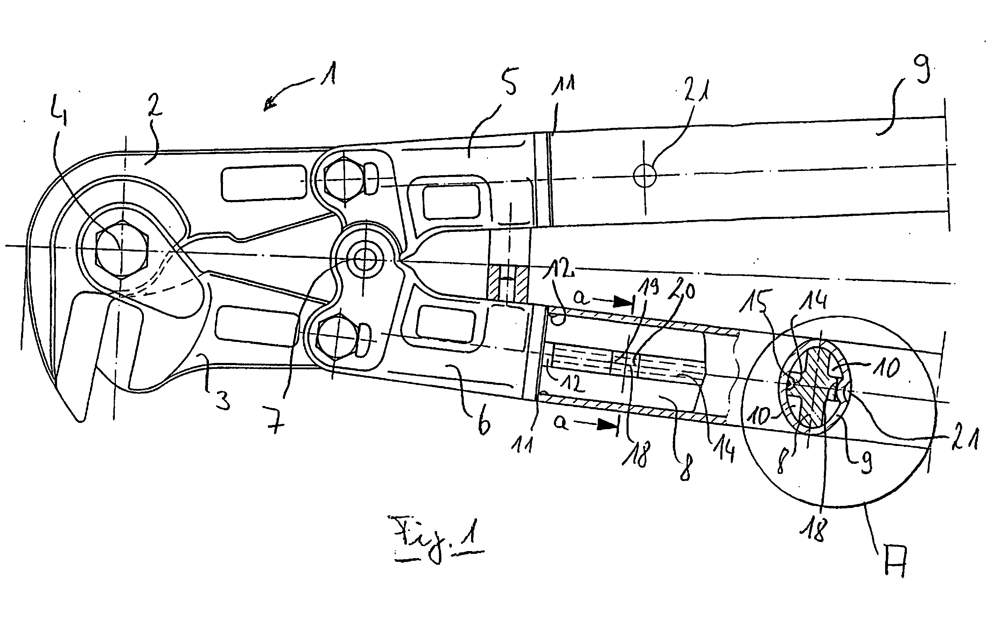

Die Figur 1 zeigt einen erfindungsgemäßen Mattenschneider 1 für Baustahlmatten mit einem Winkelmesser und einem Eckmesser 3, die in einer Achse 4 zueinander schwenkbar gelagert sind. Das Winkelmesser 2 und das Eckmesser 3 werden über zwei Rohrköpfe 5 und 6, die gegeneinander um eine Achse 7 verschwenkbar sind, in an sich bekannter Weise betätigt. Die Rohrköpfe 5 und 6 tragen auf ihrer der Achse 7 gegenüberliegenden Seite je einen Abschnitt 8, von denen in der Zeichnung nur der Abschnitt 8 des Rohrkopfes 6 dargestellt ist. Auf den Abschnitt 8 wird jeweils ein rohrförmiges Griffstück 9 aufgesteckt. Der Abschnitt 8, auch Rohrkopfstumpf genannt, ist in der Detaildarstellung A in einem Querschnitt entlang der Linie a-a gezeigt. Der Abschnitt 8 weist einen quer zur Längsachse der Griffstücke 9 gesehen kreuzförmigen Querschnitt auf, wobei der Abschnitt 8 an der Innenseite des im Querschnitt ovalen Griffstückes 9 im Bereich der großen Halbachse und im Bereich der kleinen Halbachse anliegt und das Griffstück 9 in diesen Bereichen geführt wird. Der Abschnitt 8 weist zwischen den die Wandung des Griffstückes 9 führenden Abschnitten Ausnehmungen oder Nuten 10 auf, die in Längsrichtung über die gesamte Länge des Abschnitts 8 verlaufen.

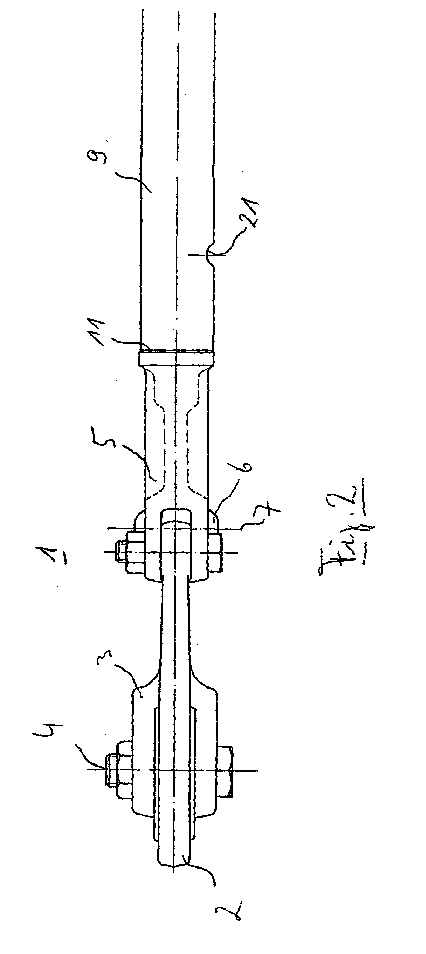

Figur 2 zeigt den insoweit beschriebenen Mattenschneider in einer Ansicht in Bewegungsrichtung. Gleiche Bauelemente sind mit gleichen Bezugsziffern versehen.

Im Detail betrachtet ist der Abschnitt 8 an den Rohrkopf 6 und entsprechend an den Rohrkopf 5 zunächst in einer Gesenkschräge 11 angesetzt, die in eine umlaufende Freistichnut 12 übergeht. Die Gesenkschräge 11 und die Freistichnut 12 erlauben ein sauberes Anstoßen des Griffstücks 9 an den Rohrkopf 5 bzw. 6, wenn dieser zum Erreichen einer Preßpassung auf den Abschnitt 8 aufgesetzt wird. Der Abschnitt 8 trägt weiterhin eine Nut 14 mit halbkreisförmigem Querschnitt, die in einer Führungsfläche 15 in Längsrichtung des Rohrkopfstumpfes 8 mittig eingebracht ist. Die Nut 14 ist im Querschnitt so eingerichtet, daß sie den Überstand einer Schweißnaht 15 des nahtgeschweißten Griffstücks aufnehmen kann. Somit erlaubt die Nut 14 die Verwendung eines nahtgeschweißten Rohres mit einer Orientierung, bei der die Naht im Bereich des geringsten Durchmessers des ovalen Griffstücks 9 angeordnet ist. Hier liegt im Betrieb die neutrale Faser des Griffstücks 9, also der am wenigsten belastete Bereich, in dem die Schweißnaht 15 unkritisch anzubringen ist. Der Nut 14 gegenüber ist ebenfalls im Bereich der neutralen Faser, also im Bereich der kurzen Halbachse des ovalen Querschnitts, eine weitere Nut 18 eingebracht, die in Längsrichtung der zugehörigen Führungsfläche durch Nutenwände 19 und 20 begrenzt ist. Das Griffstück 9 ist im Bereich der Nut 18 beispielsweise durch Einpressen einer Kugel derart plastisch verformt, daß ein Bereich 21 in die Nut 18 eingreift und an beiden Nutenflanken 19 und 20 fest anliegt. Die Griffstücke 9 sind hierdurch an dem jeweiligen Abschnitt 8 gegen ein Abziehen in Längsrichtung zuverlässig gesichert.

Das Winkelmesser 2, das Eckmesser 3 und die Rohrköpfe 5 und 6 sind in der Praxis aus geschmiedetem Werkzeugstahl, wie es bei derartigen Schneidwerkzeugen üblich ist. Bei der insoweit beschriebenen Gestaltung des jeweiligen Rohrkopfstumpfes 8 kann jedoch für die Griffstücke 9 ein Rohr aus einer Leichtmetallegierung verwendet werden. Die Verwendung von Leichtmetallrohren, die außerdem im Bereich der neutralen Faser nahtgeschweißt sein können, führt zusammen mit den in die Rohrkopfstümpfe 8 eingebrachten Nuten 10 zu einer erheblichen Gewichtsreduzierung und damit zu einer deutlichen Kraftersparnis im Gebrauch auf einer Baustelle. Es hat sich als vorteilhaft erwiesen, wenn die Führungslänge, also die Länge der an der Innenseite der Griffstücke 9 anliegenden, kreuzförmig angeordneten Stege, etwa doppelt so groß ist wie der Innendurchmesser des Rohres im Bereich der großen Halbachse. Dann ist die Preßpassung des Griffstücks 9 auf dem Abschnitt 8 auf Dauer auch bei erheblichen Belastungen fest. Die kreuzförmige Ausbildung der Abschnitte 8 hat außerdem den Vorteil, daß die Rohre der Griffstücke 9 beim Aufpressen auf die Abschnitte 8 eine gewisse Freiheit in dem Sinne haben, daß sie sich bei zu enger Passung im Bereich der Nuten 10 nach innen anpassen können.

## Patentansprüche

1. Zange mit rohrförmigen Griffstücken (9), die im Betrieb aufeinander zu und voneinander weg zu bewegen sind, und mit Rohrköpfen (5,6), auf die die Griffstücke (9) in Längsrichtung aufgesetzt sind, wobei die Rohrköpfe (5,6) jeweils einen in die Griffstücke einsetzbaren Abschnitt (8) angepaßten Querschnitts aufweisen,
wobei der Abschnitt (8) zwischen der in Bewegungsrichtung liegenden Achse und der quer zur Bewegungsrichtung liegenden Achse in Längsrichtung verlaufende Ausnehmungen (10) aufweist und die Rohrköpfe (5,6) in dem in die Griffstücke (9) einsetzbaren Abschnitt (8) im Querschnitt etwa kreuzförmig gestaltet sind, so
daß in der etwa mit der Bewegungsrichtung zusammenfallenden Achse und der etwa quer zur Bewegungsrichtung liegenden Achse Stege oder Rippen gebildet sind, und die Rohrköpfe (5,6) in dem in die Griffstücke (9) einsetzbaren Abschnitt (8) wenigstens eine in Längsrichtung durch Nutwände (19,20) begrenzte Ausnehmung oder Nut (18) aufweisen,
wobei mit den Nutwänden (19,20) eine formschlüssig gesicherte Verbindung zwischen den Rohrköpfen (5,6) und den Griffstücken (9) hergestellt wird.

2. Zange nach Anspruch 1, **dadurch gekennzeichnet, daß** die Griffstücke (9) in ihrer etwa mit der Bewegungsrichtung zusammenfallenden Achse eine größere Dicke aufweisen als in der etwa quer zur Bewegungsrichtung liegenden Achse.

3. Zange nach einem der vorhergehenden Ansprüche, **dadurch gekennzeichnet, daß** die Griffstücke (9) im Querschnitt zumindest abschnittsweise nicht kreisrund ausgebildet sind.

4. Zange nach einem der vorhergehenden Ansprüche, **dadurch gekennzeichnet, daß** die Griffstücke (9) im Querschnitt zumindest abschnittsweise oval sind.

5. Zange nach einem der vorhergehenden Ansprüche, **dadurch gekennzeichnet, daß** die Griffstücke (9) aus nahtgeschweißten Rohren gefertigt sind

6. Zange nach Anspruch 5, **dadurch gekennzeichnet, daß** die geschweißte Naht (15) der Rohre in der etwa quer zur Bewegungsrichtung liegenden Achse, insbesondere im Bereich des kleinsten Durchmessers der Rohre angeordnet ist.

## Claims

1. Pliers with tubular grip ends (9), during the operation of which are moved towards one another and away from one another and with tube heads (5, 6) on which the grip ends (9) are seated in the longitudinal. direction, whereby the tube heads (5, 6) in each case comprise a piece (8) with a suitable profile that can be inserted into the grip ends,
whereby the piece (8) includes recesses (10) running in the longitudinal direction between the axis lying in the direction of movement and the axis lying diagonally to the direction of movement and the profile of the tube heads (5, 6) in the piece (8) that can be inserted into the grip ends (9) is roughly in the form of a cross, in such a way that teeth or ribs are formed in the axis roughly coinciding with the direction of movement and in the axis roughly lying diagonally to the direction of movement and the tube heads (5, 6) in the piece (8) that can be inserted into the grip ends (9) comprise at least one recess or groove (18) delimited in the longitudinal direction by groove walls (19, 20), whereby said groove walls (19, 20) ensure a positive connection between the tube heads (5, 6) and the grip ends (9).

2. Pliers according to claim 1, **characterized in that** the grip ends (9) possess a greater thickness in their axis coinciding roughly with the direction of movement, than in the axis roughly lying diagonally to the direction of movement.

3. Pliers according to any one of the preceding claims, **characterized in that** the profile of the grip ends (9) is not perfectly round at least in certain sections.

4. Pliers according to any one of the preceding claims, **characterized in that** the profile of the grip ends (9) is oval at least in certain sections.

5. Pliers according to any one of the preceding claims, **characterized in that** the grip ends (9) are made from welded tubes.

6. Pliers according to claim 5, **characterized in that** the weld-join (15) of the tubes is positioned in the axis roughly lying diagonally to the direction of movement, in particular in the vicinity of the thinnest part of the tubes.

## Revendications

1. Pince comportant des éléments de manche tubulaires (9) que l'on rapproche et que l'on éloigne l'un de l'autre pendant le fonctionnement, et comportant des têtes tubulaires (5, 6) sur lesquelles les éléments de manche (9) sont enfilés en direction longitudinale, les têtes tubulaires (5, 6) comprenant chacune un tronçon (8) de section adaptée susceptible d'être mis en place dans les éléments de manche,
dans laquelle le tronçon (8) entre l'axe situé en direction de déplacement et l'axe situé transversalement à la direction de déplacement présente des évidements (10) s'étendant en direction longitudinale, et les têtes tubulaires (5, 6) sont réalisées avec une section approximativement en croix dans le tronçon (8) susceptible d'être mis en place dans les éléments de manche (9), de sorte que des barrettes ou des nervures sont formées suivant l'axe approximativement coïncidant avec la direction de déplacement et suivant l'axe situé approximativement transversalement à la direction de déplacement, et les têtes tubulaires (5, 6) présentent au moins un évidement ou une gorge (18) limité(e) en direction longitudinale par des parois de gorge (19, 20) dans le tronçon (8) susceptible d'être mis en place dans les éléments de manche (9),
dans laquelle une liaison bloquée en coopération de formes entre les têtes tubulaires (5, 6) et les éléments de manche (9) est établie avec les parois de gorge (19, 20).

2. Pince selon la revendication 1, **caractérisée en ce que** les éléments de manche (9) présentent suivant leur axe coïncidant approximativement avec la direction de déplacement une épaisseur supérieure à celle suivant l'axe situé transversalement à la direction de déplacement.

3. Pince selon l'une des revendications précédentes, **caractérisée en ce que** les éléments de manche (9) sont réalisés avec une section non circulaire, du moins par tronçons.

4. Pince selon l'une des revendications précédentes, **caractérisée en ce que** les éléments de manche (9) sont réalisés avec une section ovale, du moins par tronçons.

5. Pince selon l'une des revendications précédentes, **caractérisée en ce que** les éléments de manche (9) sont réalisés à partir de tubes soudés avec un cordon de soudure.

6. Pince selon la revendication 5, **caractérisée en ce que** le cordon de soudure (15) des tubes est agencé suivant l'axe situé approximativement transversalement à la direction de déplacement, en particulier dans la zone du plus petit diamètre des tubes.
